# EUROPEAN PATENT SPECIFICATION

(11) **EP 1 372 919 B1**
(45) Date of publication and mention of the grant of the patent: **22.03.2006**
(21) Application number: 02753699.4
(22) Date of filing: 22.03.2002
(51) Int. Cl.: B27K 3/50

(54) **WOOD PRESERVING CONCENTRATE**
HOLZKONSERVIERUNGSKONZENTRAT
CONCENTRE PERMETTANT LA CONSERVATION DU BOIS

(30) Priority: 27.03.2001 DK 200100501; 27.09.2001 US 324953 P
(43) Date of publication of application: 02.01.2004
(73) Proprietor: A/S Collstrop-Dansk Träimprägnering, 6000 Kolding (DK)
(72) Inventor: WASSMANN, Lars, DK-5400 Bogense (DK)
(74) Representative: Klinge, Ulla Callesen
(86) International application number: PCT/DK2002/000193
(87) International publication number: WO 2002/076696

(56) References cited:
- EP-A1- 0 562 164
- EP-A1- 0 841 134
- US-A- 4 750 934

## Description

### Technical Field

The invention relates to an emulsifier-free, water-dilutable wood preserving concentrate which can be used for vacuum impregnation, flow-coating, dipping, pressure impregnation, spraying and painting, as well as to a method of preserving wood by means of the wood preserving concentrate in a suitable dilution. The invention relates furthermore to the use of the wood preserving concentrate according to the invention for vacuum impregnation, flow-coating, dipping, spraying, painting and pressure impregnation after the concentrate has been diluted 1 to 125 times.

### Background Art

The preservation of wood involves various preserving methods as well as various types of wood preservatives, where the composition of the preservative has been selected in accordance with the desired preserving method.

Usually, the use of conventional wood preservatives involves a strain on the environment. The early wood preservatives contained creosote, which turned out to be carcinogenic. Later on, arsenic- and chromium-containing compositions were developed, but all these compositions are now banned chemicals in Denmark. Many of the wood preservatives approved today are based on copper and boron, which are substances also being environmentally undesirable. A possibility of reducing the use of copper is at present in great demand.

The choice of wood preservative has been conditioned by the desired type of preservation. The vacuum impregnation implies that the air content in the wood is removed under vacuum followed by the wood being filled with preservation fluid. The excess preservation fluid is subsequently removed by means of vacuum, and the remaining preservation fluid dries up in the wood. The vacuum impregnation has been used for preservation of inter alia window frames. The hitherto used compositions are conventionally based on organic solvents, such as turpentine. However, in 1997 EU introduced tightened requirements to the emission of vapours from organic solvents, including turpentine vapours, which made the use of these solvents difficult.

As an alternative to vacuum impregnation, it is possible to some extent to use flow-coating, viz. a technique implying that the wood is sprayed most frequently in the assembled state with a high excess of preservation fluid which is collected and recirculated. This technique usually employs water-based compositions, which, however, results in a predetermined raising of the wood fibres. Therefore it is necessary to carry out an intermediate grinding before a surface treatment can be carried out.

Previously, the pressure impregnation employed arsenic-, chromium- and copper-containing agents, said pressure impregnation involving a high-pressure pressing of the preservation fluid into the wood. However, in 1991 arsenic was banned, and in 1996 chromium was banned as well. It is still allowed to use copper, but compositions based on copper are encumbered with leaching problems.

Today metal-free compositions, such as Gori Pres 10, already exist. These compositions include 3-iodo-2-propynyl-butyl-carbamate (IPBC) in combination with other biocides, such as tebuconazole and propiconazole.

EP 0841134 B1 discloses the use of a water-based, metal-free wood preservative based on a triazole compound as active ingredient, which furthermore includes an alkyd resin, such as Uradil, an organic solvent, such as butylglycol, as well as an emulsifier to be used by the pressure or vacuum impregnation.

In addition, EP 0562164 B1 discloses an emulsifier-free, water-dilutable concentrate including a fungicide and an insecticide, such as propiconazole and permethrine, as active ingredients, an organic solvent, as well as an alkyd resin based on a linolenic acid modified polyester having 5 to 100 ethylene oxide units, such as URAD2257DD.

US4750934 A discloses a wood preserving composition comprising an admixture of at least one insecticide, at least on organic binder comprising a material selected from the group consisting of alkyd resins and vegetable drying oils and at least one diluent.

Usually, pressure-impregnated wood cannot be reused and must be placed in permanent storage. Sometimes it it possible to burn such wood under particularly controlled conditions.

Therefore a demand exists for a wood preservative not straining me environment to the same extent as the hitherto known preservatives, i.e. preservatives not straining neither the environment nor the persons handling these preservatives. This demand can be met by using only a single active substance, viz. IPBC, which is more safe than Gori Pres 10. Furthermore, an advantage is found in the same preserving agent being applicable for various types of impregnation, such as vacuum impregnation, flow-coating, dipping, application by means of a brush, and pressure impregnation. In addition, the wood preservative should be such that it only involves a minimum raising of the wood fibres. None of the hitherto known compositions meet all these requirements.

### Brief Description of the Invention

Now it has turned out that it is possible to produce a single concentrate which is environmentally acceptable, and where said concentrate can be used for all types of impregnation without the use of an emulsifier unlike the hitherto known compositions.

The concentrate contains water, a solvent, an active ingredient, such as a pesticide, an air-curing resin, as well as optionally an antifoaming agent and a colouring pigment.

Thus, the invention relates to an emulsifier-free, water-dilutable wood preserving concentrate including 20 to 50% by weight, preferably 25 to 40% by weight of a water-dilutable binder based on an acrylic acid-modified, polyethylene-free alkyd binder, 0.5 to 20% by weight, preferably 10 to 15% by weight of active ingredient, 1 to 15% by weight, preferably 5 to 10% by weight of an organic solvent, and 5 to 75% by weight, preferably 30 to 55% by weight of water.

The invention relates also to a wood preservative for vacuum impregnation, flow-coating or dipping, wherein the wood preservative comprises the wood preserving concentrate according to the invention diluted 1 to 25 times, preferably 1 to 10 times with water.

Furthermore, the invention relates to a wood preservative for pressure impregnation, wherein the wood preservative comprises the wood preserving concentrate according to the invention diluted 15 to 150 times, preferably 75 to 125 times with water.

According to a further aspect, the invention relates to a method of preserving wood, said method involving application of an emulsifier-free, water-dilutable wood preserving concentrate including 20 to 50% by weight, preferably 25 to 40% by weight of a water-dilutable binder based on an acrylic acid-modified, polyethylene-free alkyd binder, 0.5 to 20% by weight, preferably 10 to 15% by weight of active ingredient, 1 to 15% by weight, preferably 5 to 10% by weight of an organic solvent, and 5 to 75% by weight, preferably 30 to 55% by weight of water, to the wood which is to be preserved.

Finally, the invention relates also to the use of the wood preserving concentrate according to the invention for vacuum impregnation, flow-coating, dipping spraying or painting, whereby the concentrate is diluted 1 to 25 times, preferably 1 to 10 times with water, or to the use of the concentrate for pressure impregnation, whereby said concentrate is diluted 15 to 150 times, preferably 75 to 125 times with water.

### Detailed Description of the Invention

It turned out surprisingly that the use of a self-emulsifying alkyd binder of a small average molecular size and therefore a good penetration ability as well as a good solubility ability in water renders it possible to use the same concentrate for all types of preservation of wood.

The concentrate according to the invention comprises a binder based on an acrylic acid-modified, polyethylene-free alkyd resin. The particular properties of the resin render it possible to carry out almost any dilution of the concentrate without causing a precipitation of said resin. These particular properties can be ascribed to the acrylic acid-modification which implies that the resin in the concentrate is water-soluble in all ratios, and furthermore the resin presents a suitably small average molecular size of less than 60 nm with the result that a sufficient penetration into the wood is allowed. Acrylic acid-modified alkyd resins turned out to be particularly suited for avoiding precipitation problems. The degree of acrylic acid-modification may vary, but Resydrol AY586/38WA turned out to be a particularly suited alkyd resin, said resin combining the demand for a good penetration power with a high solubility in water.

According to a preferred embodiment, the invention relates to a wood preserving concentrate which is further characterised by the alkyd binder being Resydrol AY586/38WA.

The concentrate according to the invention comprises in addition an active ingredient which ensures a protection of the wood against rot, fungi, insects and the like. The choice of an active ingredient depends on the protection desired. A wide range of known substances with a recognized effect as fungicides, insecticides or flame-retardant and/or fire-retardant substances can be used according to the invention. In order to meet the demand for an environmentally acceptable wood preservative, a preferred embodiment according to the invention uses an active ingredient of the type IPBC, which turned out to be safe for humans in the amounts used in practice. According to a preferred embodiment, the invention relates to a wood preserving concentrate, wherein the active ingredient is Troysan polyphase AF3.

The active ingredient is dissolved in an organic solvent before the addition of binder and water. The choice of solvent depends more or less of the choice of active ingredient. Accordingto a preferred embodiment, the concentrate comprises according to the invention therefore glycols, preferably glycols of C₁-C₆ alkanes, most preferred butyl diglycol (2-(2-butoxyethoxy)etbanol) as organic solvent

Upon treatment, the resin cures at contact with the oxygen of the air and results in a tight structure which can be used for fixing and sealing substances in wood. Upon the curing, no visible signs are found of the preservative on the surface of the wood unless pigments are added.

According to a second preferred embodiment, the wood preserving concentrate comprises therefore also a colouring pigment.

The colouring pigment is added in order to allow an identification of the preserved wood. Green pigment is conventionally used in wood preservatives, but any other colour can be used as well. The use of another colour than green facilitates the distinguishing of wood preserved by means of a wood preservative according to the invention from conventionally preserved wood.

According to a preferred embodiment, the wood preserving concentrate comprises also 0 to 2% by weight, preferably 0.2 to 1% by weight of an anti-foaming agent, since a foaming effect can render the use thereof difficult, especially in connection with pressure and vacuum impregnation.

The wood preserving concentrate according to the invention can be used for protection and sealing of wood in connection with pressure or vacuum impregnation and/or a surface treatment by way of dipping, flow-coating or by means of a brush or a spray gun. According to a particular embodiment, the invention therefore relates to a method of preserving wood, wherein said method implies that the application of the wood preservative involves a pressure impregnation, a vacuum impregnation, a flow-coating or a dipping. It is also possible to apply the concentrate by means of a brush or by means of a spray gun.

The use of a moderately diluted (1 to 5 times) concentrate is suited for surface treatment of wood by means of a brush or a spray gun. In this manner the wood is made resistant to fungal attacks. In addition, such a use closes the structure of the wood with the result that a water absorption allowing rot is prevented.

After the concentrate has been diluted 1 to 15 times, preferably 1 to 10 times, said concentrate can be used for pressure and vacuum impregnation, flow-coating or dipping. Such a treatment results in a sealing of the wood, whereby a leaching of salts into the wood is avoided. These salts can for instance be fire-retardants or biocides.

Upon a dilution 15 to 150 times, preferably 75 to 125 times, the concentrate can be used for a pressure impregnation. As a result, a full penetration into splint wood is obtained and the wood is protected against rot and fungus.

The concentrate according to the invention presents a number of advantages compared to the known wood preservatives. Although the concentrate is water-based, only a minor raising of the wood fibres appears in connection with the use of said concentrate. The raising, if any, of the wood fibres reduces the applicability of said wood, and the avoiding thereof presents therefore a significant technical advantage. Furthermore, through the use of physiologically and environmentally safe active ingredients, such as IPBC, treated wood can be reused for instance for the manufacture of chipboards. Furthermore, the use of an environmentally acceptable preservative according to the invention renders it possible to initially preserve the wood followed by a processing of said wood into a ready-to-use product.

### Example 1

The following concentrate is produced, said concentrate being based on Resydrol AY586/38 as alkyd binder, butyl diglycol as organic solvent, Troysan polyphase AF3 as fungicide and Dehydran 1293 as anti-foaming agent, and the ability of said substances to protect wood in connection with various applications was tested.

| Concentrate | (% by weight) |
|---|---|
| Water | 51.5 |
| Butyl diglycol | 10.0 |
| Troysan Polyphase AF3 | 12.0 |
| Dehydran 1293 | 0.5 |
| Resydrol AY586/38WA | 26.0 |

### Pressure impregnation.

The above concentrate was tested against Basidiomycetes attacks according to the EN113-standard. The preservation was carried out in form of pressure impregnation employing the concentrate in various dilutions as indicated in the following Table 1. The weight loss indicates the weight loss of wood pulp in percentages caused by fun-gus attacks upon grafting with Basidomycetes and growth for 16 weeks.

**Table 1 Table 1. (n=4) and the standard deviation (std) is indicated in brackets. The control is without the addition of active su'bstance.**

| Dilution factor | Absorption (g) | Retainment IPBC (kg/m³) | Corrected weight loss (%) |
|---|---|---|---|
| Control | 12.83 (0.74) | 0.00 (0.00) | 34.99 (2.38) |
| 250 X | 14.52 (0.33) | 2.98 (0.07) | 23.58 (22.63) |
| 167 X | 13.99 (0.31) | 4.30 (0.09) | 2.85 (5.79) |
| 125 X | 14.18 (0.33) | 5.82 (0.13) | 0.20 (0.41) |
| 83 X | 14.14 (0.40) | 8.70 (0.24) | 0.15 (0.14) |
| 63 X | 14.14 (0.55) | 11.6 (0.45) | 0.47 (0.10) |

### Flow-coating.

The above concentrate was tested in connection with flow-coating of garden furniture in a 4 x dilution. The garden furniture was subsequently placed outdoors for exposure without visible signs of attacks.

### Vacuum impregnation.

The concentrate according to the invention has also been used in connection with vacuum impregnation in the same dilution as in connection with pressure impregnation, viz. 50 to 150 x dilution, with a satisfactory result. Only minor raisings of the wood fibres were observed, and no attacks of neither surface mould, rot nor fungus were identified.

### Application.

The concentrate with an active substance content of 3% was applied by means of a brush, and the treated articles were subsequently placed outdoors for exposure. No attacks of neither rot nor mould on the surface were observed.

## Claims

1. An emulsifier-free, water-dilutable wood preserving concentrate comprising:
a) 20 to 50% by weight, preferably 25 to 40% by weight of a water-dilutable binder based on an acrylic acid-modified, polyethylene-free alkyd binder,
b) 0.5 to 20% by weight, preferably 10 to 15% by weight of active wood preserving substance,
c) 1 to 15% by weight, preferably 5 to 10% by weight of an organic solvent,
d) 5 to 75% by weight, preferably 30 to 55% by weight of H₂O.

2. A wood preserving concentrate as claimed in claim 1, wherein the organic solvent comprises glycols, preferably a glycol of C₁-C₆ alkenes or a diglycol.

3. A wood preserving concentrate as claimed in claim 1, wherein the active ingredient comprises a fungicide, insecticide and/or a flame-retardant/fire-retardant agent

4. A wood preserving concentrate as claimed in claim 1, wherein the concentrate further comprises 0.2 to 1% by weight of an anti-foam-ing agent

5. A wood preserving concentrate as claimed in claim 1, wherein the concentrate further comprises a colouring pigment.

6. A wood preservative for vacuum impregnation, flow-coating or dipping, wherein the preservative comprises the wood preserving concentrate as claimed in claims 1 to 6 diluted 1 to 25 times, preferably 1 to 10 times with water.

7. A wood preservative for pressure impregnation, wherein the preservative comprises the wood preserving concentrate as claimed in claims 1 to 6 diluted 15 to 150 times, preferably 75 to 125 times with water.

8. A method of preserving wood, wherein an emulsifier-free, water-dilutable wood preserving concentrate is applied, said wood preserving concentrate comprising
a) 20 to 50% by weight, preferably 25 to 40% by weight of a water-dilutable binder based on an acrylic acid-modified, polyethylene-free alkyd binder,
b) 0.5 to 20% by weight, preferably 10 to 15% by weight of active substance,
c) 1 to 15% by weight, preferably 5 to 10% by weight of an organic solvent,
d) 5 to 75% by weight, preferably 30 to 55% by weight of H₂O,
to the wood to be preserved.

9. A method as claimed in claim 9, wherein the application involves a pressure impregnation, a vacuum impregnation, a flow-coating, a dipping, a spraying or a painting.

10. The use of a wood preserving concentrate as claimed in any of the claims 1 to 6 for spraying or painting, wherein the concentrate is used after dilution 1 to 5 times.

11. The use of a wood preserving concentrate as claimed in any of the claims 1 to 6 for vacuum impregnation, flow-coating or dipping, wherein the wood preserving concentrate is used after dilution 1 to 25 times, preferably 1 to 10 times.

12. The use of a wood preserving concentrate as claimed in any of the claims 1 to 6 for pressure impregnation, wherein the wood preserving concentrate is used after dilution 15 to 150 times, preferably 75 to 125 times.

## Patentansprüche

1. Emulgatorfreies, wasserverdünnbares Holzkonservierungskonzentrat, bestehend aus
a) 20 - 50 % Gew.-%, vorzugsweise 25 - 40 Gew.-% eines wasserverdünnbaren Bindemittels basierend auf einem acrylsäuremodifizierten, polyethylenfreien alkydischen Bindemittel,
b) 0,5 - 20 Gew.-%, vorzugsweise 10 - 15 Gew.-% eines aktiven Holzkonservierungsmittels,
c) 1 - 15 Gew.-%, vorzugsweise 5 - 10 Gew.-% eines organischen Lösungsmittels,
d) 5 - 75 Gew.-%, vorzugsweise 30 - 55 Gew.-% H₂O.

2. Holzkonservierungskonzentrat nach Anspruch 1, bei dem das organische Lösungsmittel Glykole, vorzugsweise ein Glykol mit C₁- bis C₆-Alkengruppen, oder ein Diglykol enthält.

3. Holzkonservierungskonzentrat nach Anspruch 1, wobei der aktive Bestandteil ein Fungizid, Insektizid und/oder ein schwerentflammbares oder schwerbrennbares Mittel enthält.

4. Holzkonservierungskonzentrat nach Anspruch 1, bei dem das Konzentrat weiterhin 0,2 - 1 Gew.-% eines Antischaummittels enthält.

5. Holzkonservierungskonzentrat nach Anspruch 1, bei dem das Konzentrat außerdem ein färbendes Pigment enthält.

6. Holzkonservierer für die Vakuum-Imprägnierung, Fließbeschichtung (flow-coating) oder Tauchbehandlung, bei dem das Mittel ein Holzkonservierungskonzentrat gemäß Anspruch 1 - 6 ist, das 1 - 25fach, vorzugsweise 1 - 10fach mit Wasser verdünnt ist.

7. Holzkonservierer für die Druckimprägnierung, bei dem das Mittel ein Holzkonservierungskonzentrat gemäß Anspruch 1 - 6 enthält, das 15 - 150fach, vorzugsweise 75 - 125fach mit Wasser verdünnt ist.

8. Holzschutzverfahren, wobei das zu schützende Holz mit einem emulgatorfreien, wasserverdünnbaren Holzkonservierungsmittel behandelt wird, bestehend aus:
a) 20 - 50 % Gew.-%, vorzugsweise 25 - 40 Gew.-% eines wasserverdünnbaren Bindemittels basierend auf einem acrylsäuremodifizierten, polyethylenfreien alkydischen Bindemittel,
b) 0,5 - 20 Gew.-%, vorzugsweise 10 - 15 Gew.-% aktiver Substanz ,
c) 1 - 15 Gew.-%, vorzugsweise 5 - 10 Gew.-% eines organischen Lösungsmittels,
d) 5 - 75 Gew.-%, vorzugsweise 30 - 55 Gew.-% H₂O.

9. Verfahren nach Anspruch 8, wobei die Behandlung eine Druckimprägnierung, eine Vakuum-Imprägnierung, eine Fließbeschichtung, eine Tauchbehandlung, ein Besprühen oder Bestreichen umfasst.

10. Verwendung eines Holzkonservierungsmittels nach einem der Ansprüche 1 - 6 zum Besprühen oder Bestreichen, wobei das Holzkonservierungskonzentrat nach einer 1 - 5fachen Verdünnung verwendet wird.

11. Verwendung eines Holzkonservierungsmittels nach einem der vorherigen Ansprüche 1 - 6 zum Vakuum-Imprägnieren, Fließbeschichten oder Tauchen, wobei das Holzkonservierungskonzentrat nach einer 1 - 25fachen, vorzugsweise 1 - 10fachen Verdünnung verwendet wird.

12. Verwendung eines Holzkonservierungsmittels nach einem der Ansprüche 1 - 6 zur Druckimprägnierung, wobei das Holzkonservierungskonzentrat nach einer 15 - 150fachen, vorzugsweise 75 - 125fachen Verdünnung verwendet wird.

## Revendications

1. Concentré de préservation de bois diluable dans l'eau, sans émulsifiant, comportant :
a) 20 à 50 % en poids, de préférence 25 à 40 % en poids, d'un liant diluable dans l'eau basé sur un liant d'alkyde sans polyéthylène, modifié par acide acrylique,
b) 0,5 à 20 % en poids, de préférence 10 à 15 % en poids, d'une substance active de préservation de bois,
c) 1 à 15 % en poids, de préférence 5 à 10 % en poids, d'un solvant organique,
d) 5 à 75 % en poids, de préférence 30 à 55 % en poids, de H₂O.

2. Concentré de préservation de bois selon la revendication 1, dans lequel le solvant organique comporte des glycols, de préférence un glycol d'alcènes C₁-C₆ ou un diglycol.

3. Concentré de préservation de bois selon la revendication 1, dans lequel l'ingrédient actif comporte un fongicide, un insecticide et/ou un agent retardateur de flamme/ignifuge.

4. Concentré de préservation de bois selon la revendication 1, dans lequel le concentré comporte de plus 0,2 à 1 % en poids d'un agent anti-mousse.

5. Concentré de préservation de bois selon la revendication 1, dans lequel le concentré comporte de plus un pigment colorant.

6. Agent de préservation de bois pour une imprégnation sous vide, un revêtement par arrosage ou un trempage, dans lequel l'agent de préservation comporte le concentré de préservation de bois selon les revendications 1 à 6 dilué 1 à 25 fois, de préférence 1 à 10, avec de l'eau.

7. Agent de préservation de bois pour une imprégnation sous pression, dans lequel l'agent de préservation comporte le concentré de préservation de bois selon les revendications 1 à 6, dilué 15 à 150 fois, de préférence 75 à 150 fois, avec de l'eau.

8. Procédé pour préserver du bois, dans lequel un concentré de préservation de bois diluable dans l'eau, sans émulsifiant, est appliqué, ledit concentré de préservation de bois comportant
a) 20 à 50 % en poids, de préférence 25 à 40 % en poids, d'un liant diluable dans l'eau basé sur un liant d'alkyde sans polyéthylène, modifié par acide acrylique,
b) 0,5 à 20 % en poids, de préférence 10 à 15 % en poids, d'une substance active,
c) 1 à 15 % en poids, de préférence 5 à 10 % en poids, d'un solvant organique,
d) 5 à 75 % en poids, de préférence 30 à 55 % en poids, de H₂O, au bois à préserver.

9. Procédé selon la revendication 8, dans lequel l'application implique une imprégnation sous pression, une imprégnation sous vide, un revêtement par arrosage, un trempage, une vaporisation ou une peinture.

10. Utilisation d'un concentré de préservation de bois selon l'une quelconque des revendications 1 à 6, pour la vaporisation ou la peinture, dans laquelle le concentré est utilisé après dilution de 1 à 5 fois.

11. Utilisation d'un concentré de préservation de bois selon l'une quelconque des revendications 1 à 6, pour une imprégnation sous vide, un revêtement par arrosage ou un trempage, dans laquelle le concentré de préservation de bois est utilisé après une dilution de 1 à 25 fois, de préférence 1 à 10 fois.

12. Utilisation d'un concentré de préservation de bois selon l'une quelconque des revendications 1 à 6, pour une imprégnation sous pression, dans laquelle le concentré de préservation de bois est utilisé après une dilution de 15 à 150 fois, de préférence 75 à 125 fois.
